# DEMANDE DE BREVET EUROPEEN

(11) **EP 1 336 517 A1**
(43) Date de publication de la demande: **20.08.2003**
(21) Numéro de dépôt: 03002803.9
(22) Date de dépôt: 07.02.2003
(51) Int. Cl.: B60H 1/00

(54) **Appareil de chauffage et/ou de climatisation pour habitacle de véhicule automobile, à gestion améliorée du flux d'air frais**

(30) Priorité: 18.02.2002 FR 0201993
(71) Demandeur: VALEO CLIMATISATION, 78321 La Verrière (FR)
(72) Inventeur: Auvity, Michel, 78140 Velizy (FR)

(57) **Abrégé**

L'invention se rapporte à un appareil de chauffage et/ou de climatisation (10), en particulier pour habitacle de véhicule automobile, comprenant:
- un châssis externe (11) formant une conduite de circulation d'air chaud et/ou froid en direction de conduites annexes supérieure (12, 13) et inférieure (14) d'aération,
- un moyen de propulsion d'air (15) monté dans le châssis,
- un moyen de refroidissement d'air (16) placé dans le châssis, en aval du moyen de propulsion d'air,
- un moyen de chauffage (17) de l'air propulsé placé dans le châssis, en aval du moyen de refroidissement d'air,
caractérisé en ce qu'il comprend en outre deux passages d'air frais indépendants (20, 22) aménagés entre le moyen de chauffage (17) et la paroi intérieure du châssis (11), de part et d'autre dudit moyen de chauffage (17), de manière à procurer, lorsque cela est nécessaire, un surcroît d'air frais en direction des conduites annexes d'aération (12 ; 13 ; 14).

## Description

L'invention se rapporte à un appareil de chauffage et/ou de climatisation pour habitacle de véhicule automobile offrant une gestion améliorée du flux d'air frais.

Il est connu dans l'art antérieur d'équiper les véhicules automobiles d'un ensemble de chauffage et/ou de climatisation qui comprend, disposés dans un châssis, un pulseur, un évaporateur, un radiateur, et des conduites d'aération équipées de moyens d'obturation et/ou d'orientation de l'air expulsé en direction de différentes zones de l'habitacle, que cet air soit chaud, froid ou tiède.

Or ces ensembles ne donnent pas. entièrement satisfaction, notamment au niveau du mixage de l'air propulsé en direction des conduites annexes, en particulier en direction des conduites d'aération du haut de l'habitacle, dites conduites supérieures, et au niveau de la différence de température (ΔT) entre l'air propulsé vers les conduites d'aération du bas de l'habitacle, dites conduites inférieures, et les conduites supérieures.

Pour résoudre ces problèmes, l'invention propose d'augmenter la quantité d'air frais amenée en direction de certaines conduites d'aération.

Plus précisément, l'invention a pour objet un appareil de chauffage et/ou de climatisation, en particulier pour habitacle de véhicule automobile, comprenant :
- un châssis externe formant une conduite de circulation d'air chaud et/ou froid en direction de conduites annexes supérieure(s) et inférieure(s) d'aération,
- un moyen de propulsion d'air monté dans le châssis,
- un moyen de refroidissement d'air placé dans le châssis, en aval du moyen de propulsion d'air,
- un moyen de chauffage de l'air propulsé placé dans le châssis, en aval du moyen de refroidissement d'air,
et dans lequel deux passages d'air frais indépendants sont aménagés entre le moyen de chauffage et la paroi intérieure du châssis, de part et d'autre dudit moyen de chauffage, de manière à procurer, lorsque cela est souhaité, un surcroît d'air frais en direction des conduites annexes d'aération.

Ainsi, un « by-pass » est créé en plus du passage habituel d'air frais afin d'augmenter la quantité d'air frais amené en direction de certaines des conduites d'aération.

Selon un mode particulier de réalisation, le second passage d'air frais communique directement avec au moins une conduite supérieure d'aération.

Afin de régler le débit du surplus d'air frais, un organe d'obturation est disposé en travers du second passage d'air frais pour le fermer ou l'ouvrir.

Avantageusement, l'organe d'obturation comprend un volet coulissant monté en aval du moyen de chauffage et adapté pour passer d'une première position extrême, dans laquelle il obture totalement le second passage d'air frais, à une seconde position extrême dans laquelle il ouvre le second passage d'air frais et vient se placer en regard d'une partie au moins du moyen de chauffage.

De préférence, l'appareil comprend en outre un second volet coulissant monté en aval du moyen de chauffage et adapté pour coulisser simultanément et en opposition avec le premier volet, coulissant de sorte que, dans une première position extrême opposée des deux volets, lesdits volets obturent les deux passages d'air frais et laissent passer l'air au travers du moyen de chauffage et, dans une seconde position extrême des deux volets, lesdits volets sont disposés en regard du moyen de chauffage et libèrent les deux passages d'air frais.

Afin de rendre l'appareil plus compact, les deux volets sont montés sur une tringlerie commune permettant de déplacer les volets simultanément.

De préférence, chaque volet est muni d'au moins une articulation reliée à un levier de commande présentant une crémaillère en prise avec un pignon commun aux leviers, lesdits leviers étant guidés en translation par des doigts de guidage et des butées de soutien fixés au châssis.

Afin d'amener la bonne quantité d'air en fonction de chaque conduite d'aération, la sortie du second passage d'air frais est divisée en plusieurs zones de distribution indépendantes ayant des sections de passage d'air différentes et communicant chacune avec une conduite d'aération.

Plus précisément, pour permettre une mise au point fine du by-pass et une bonne régulation de la température en fonction des différentes conduites vers lesquelles l'air est propulsé, la section de passage d'air frais de la zone de distribution communiquant avec la conduite de dégivrage est plus petite que la section de passage d'air frais de la zone de distribution communicant avec la conduite supérieure d'aération.

L'invention se rapporte également à un véhicule automobile équipé d'un ensemble de chauffage et/ou de climatisation tel que présenté.

D'autres caractéristiques, détails et avantages de l'invention ressortiront à la lecture de la description qui est faite en référence aux figures annexées données à titre d'exemple et qui représentent respectivement:
- la figure 1, une vue en coupe d'un appareil de climatisation comprenant deux passages d'air frais de part et d'autre d'un moyen de chauffage ;
- la figure 2, une vue en coupe d'un mode de réalisation de l'invention comprenant des organes d'obturation des passages d'air frais se présentant sous la forme de volets articulés ;
- la figure 3, une variante de réalisation de la figure 2 dans laquelle les organes d'obturation des passages d'air frais se présentent sous la forme de volets à glissière fonctionnant en opposition ;
- la figure 4, une vue de détail des volets à glissière de la figure 3 dans une première position extrême dans laquelle les passages d'air frais sont obturés ;
- la figure 5, une vue de détail des volets à glissière de la figure 3 dans une seconde position extrême dans laquelle les passages d'air frais sont ouverts ;
- la figure 6, une vue de dessus d'un autre mode de réalisation de l'invention dans lequel un des passages d'air frais présente des zones de distribution à sections de passage d'air différentes ; et
- la figure 7, une vue en coupe de la figure 5.

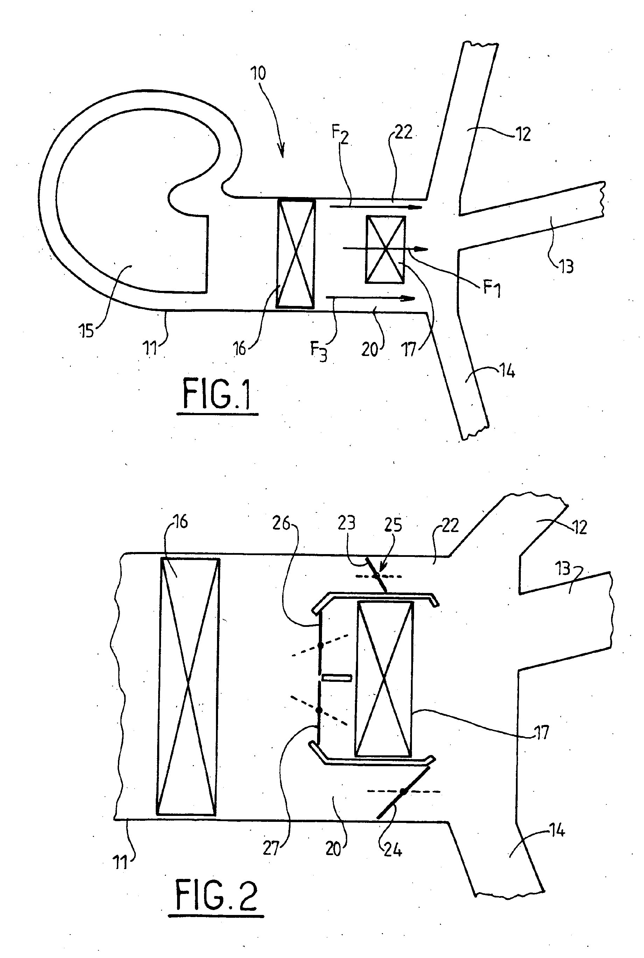

La figure 1 illustre en coupe un appareil 10 de climatisation pour un habitacle de véhicule automobile.

Cet appareil 10 comprend un châssis externe 11, par exemple en matière plastique, présentant une partie amont typiquement reliée à un tablier (non représenté) de véhicule et une partie aval divisée, dans le cas présent, en une conduite 12 de dégivrage; une conduite haute 13 d'aération d'une zone médiane de l'habitacle, s'étendant typiquement de la tête aux genoux des occupants avants du véhicule, et une conduite basse 14 d'aération d'une zone située typiquement au niveau des pieds desdits occupants.

Un pulseur 15 est placé dans une partie amont du châssis afin de propulser l'air en direction des différentes conduites annexes d'aération. Un évaporateur 16 est également placé dans le châssis 11, en aval du pulseur 15, afin de refroidir l'air provenant de l'extérieur par échange thermique, typiquement à l'aide d'un fluide caloporteur. Un radiateur 17 est aussi placé dans le châssis, en aval de l'évaporateur 16, afin de réchauffer l'air qui le traverse comme illustré par la flèche F1.

Un premier passage d'air frais 20 est matérialisé entre le radiateur 17 et la paroi interne du châssis 11, sous le radiateur 17. Un flux d'air frais illustré par la flèche F3 et sortant de l'évaporateur 16 peut donc circuler dans ce passage.

Conformément à l'invention, un second passage d'air frais 22 est matérialisé entre le radiateur 17 et la paroi interne du châssis 11, au-dessus du radiateur 17, de sorte que deux passages indépendants d'air frais sont disposés de part et d'autre du radiateur 17, l'un en position inférieure (ou basse) et l'autre en position supérieure (ou haute).

Le second passage d'air 22 frais créé ainsi un by-pass qui permet, lorsque cela est désiré, de procurer un surcroît d'air frais provenant de l'évaporateur 16 et se dirigeant en direction des conduites hautes d'aération, ce flux d'air étant illustré par la flèche F2.

Comme cela est représenté sur la figure 2, les passages d'air frais 20 et 22 peuvent être ouverts ou fermés par l'intermédiaire d'organes d'obturation 25 se présentant sous la forme de volets articulés 23 et 24 qui permettent de faire varier la quantité d'air frais en direction des conduites annexes d'aération. Ces volets 23 et 24 peuvent fonctionner ensemble ou de façon dissociée, et ils sont associés dans le cas présent à des volets annexes 26 et 27 placés devant le radiateur 17 pour en obturer ou non l'accès selon la température de l'air désirée.

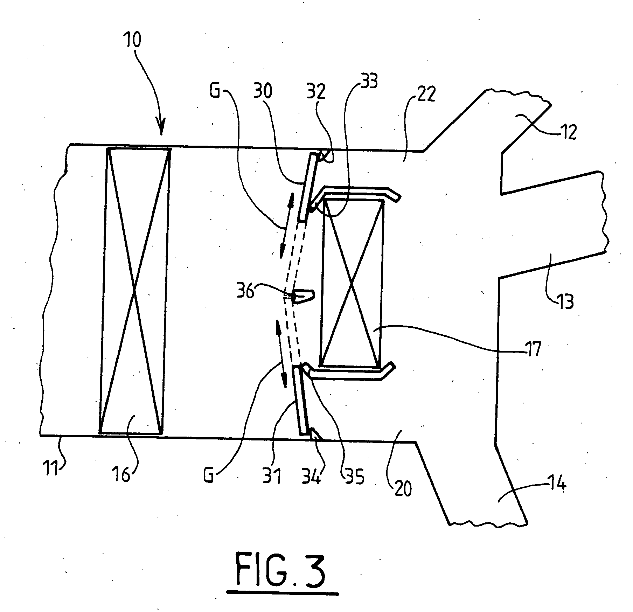

La figure 3 illustre une variante de réalisation de la figure 2 dans laquelle les organes d'obturation 25 des passages d'air frais 20 et 22 se présentent sous la forme de volets coulissant 30 et 31. Contrairement à la figure 2, ces volets coulissant 30 et 31 sont montés sensiblement en amont du radiateur et ils ne sont pas articulés mais se déplacent simultanément en translation et en opposition, comme cela est illustré par les flèches G.

Le volet coulissant 30 prend appui, selon sa position soit sur des butées d'étanchéités 32 et 33 du second conduit d'air frais 22, soit sur la butée d'étanchéité 33 et une butée d'étanchéité centrale 36. De même, le volet coulissant 31 prend appui, selon sa position, soit sur des butées d'étanchéité 34 et 35 du premier conduit d'air frais 20, soit sur la butée 35 et sur la butée centrale 36. Des fuites calibrées peuvent être prévues au niveau de ces butées.

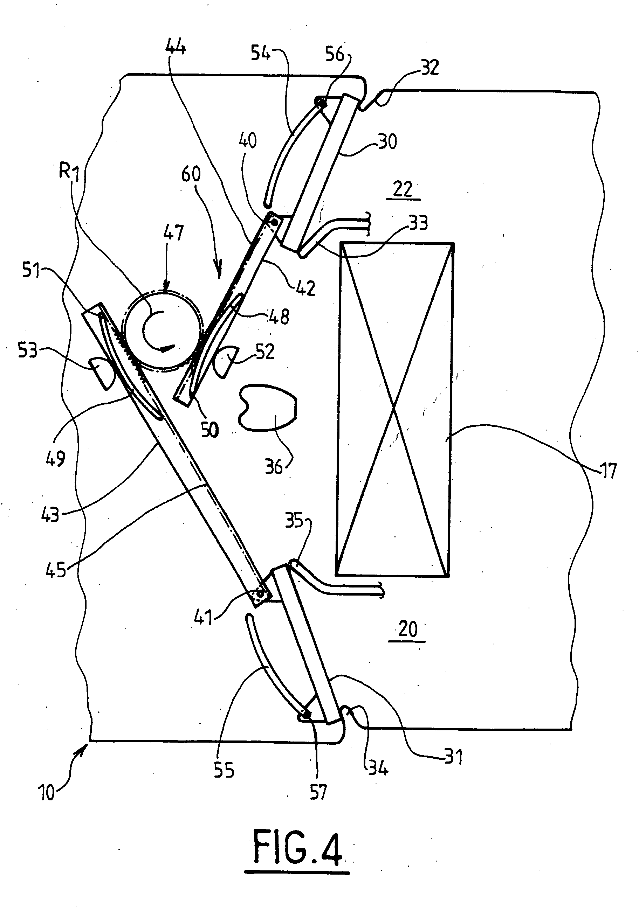

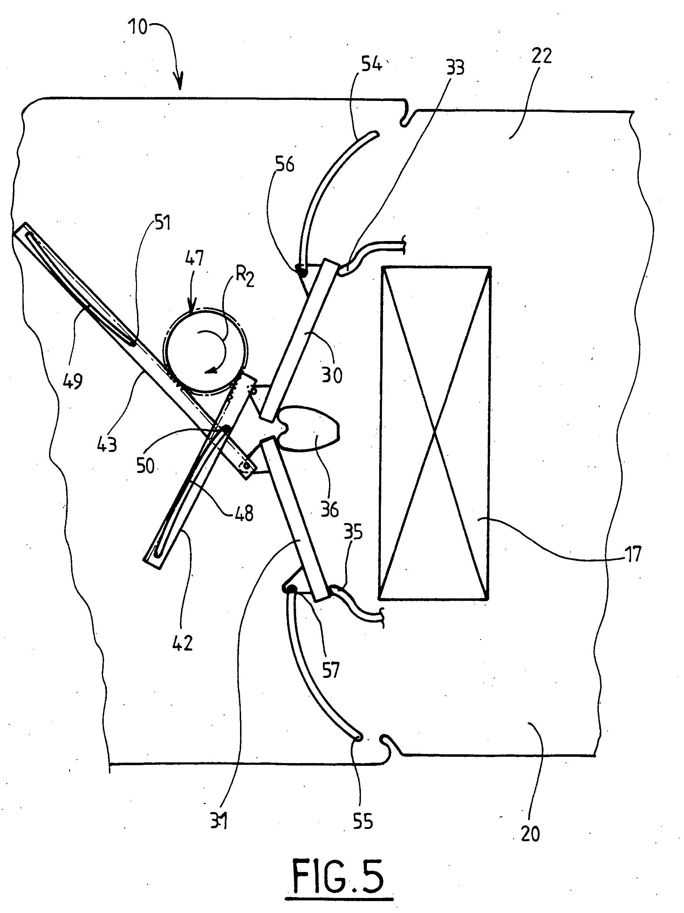

Les figures 4 et 5 illustrent de façon plus détaillée un mode particulier de réalisation des volets coulissants 30 et 31 de la figure 3. Les deux volets 30 et 31 présentent respectivement une articulation 40 et 41 reliée chacune à un levier de commande 42 et 43. Chaque levier 42 et 43 présente une crémaillère 44 et 45 en prise avec un pignon 47 s'étendant en travers du châssis. Des lumières 48 et 49 sont respectivement aménagées dans les leviers 42 et 43 afin de loger des doigts de guidage 50 et 51 fixés au châssis 11. Des butées 52 et 53 sont également prévues sur le châssis 11 pour soutenir et guider les leviers 42 et 43 lors de leurs déplacements. De même, des glissières 54 et 55 coopèrent avec des plots de guidage 56 et 57 disposés à l'opposée des articulations 40 et 41 des volets 30 et 31.

Le fonctionnement de cette tringlerie 60 commune aux deux volets 30 et 31 est simple. Le pignon 47 peut tourner dans les deux sens afin de commander simultanément le déplacement sensiblement rectiligne et en opposition des volets 30 et 31.

Ainsi, lorsque le pignon 40 tourne dans le sens contraire des aiguilles d'une montre, comme cela est illustré par la flèche R1 de la figure 4, celui-ci agit sur les crémaillères 44 et 45 afin que les leviers de commande 42 et 43 poussent les volets coulissants 30 et 31 de telle sorte qu'ils s'éloignent l'un de l'autre afin d'obturer l'accès aux passages d'air frais 20 et 22.

Ce mouvement est facilité par la coopération des plots de guidage 56 et 57 avec les glissières 54 et 55, d'une part, et par la coopération des butées de soutien 52 et 53 avec les doigts de guidage 50 et 51 et les lumières 48 et 49, d'autre part.

Dans la première position extrême illustrée par la figure 4, les volets coulissant 30 et 31 reposent de manière étanche respectivement sur les butées d'étanchéité 32 et 33 et sur les butées d'étanchéité 34 et 35.

Lorsque le pignon 40 tourne dans le sens des aiguilles d'une montre, comme cela est illustré par la flèche R2 de la figure 5, celui-ci agit sur les crémaillères 44 et 45 afin que les leviers de commande 42 et 43 tirent les volets coulissants 30 et 31 de telle sorte qu'ils se rapprochent l'un de l'autre en opposition pour venir se placer en regard du radiateur 17 afin de libérer les passages d'air frais, notamment le passage 22 qui permet d'obtenir un surcroît d'air frais.

Dans la seconde position extrême illustrée par la figure 5, les volets coulissants 30 et 31 reposent de manière étanche respectivement sur les butées 33 et 36 et sur les butées 35 et 36.

Entre ces deux positions extrêmes, les volets 30 et 31 peuvent prendre une pluralité de positions intermédiaires permettant un mixage fin de l'air chaud et froid en direction des conduites annexes d'aération.

Le déplacement des volets étant un coulissement sensiblement rectiligne réalisé de manière simultanée et en opposition, cela permet un gain de place important avec une grandé efficacité et fiabilité ainsi qu'un nombre limité de pièces.

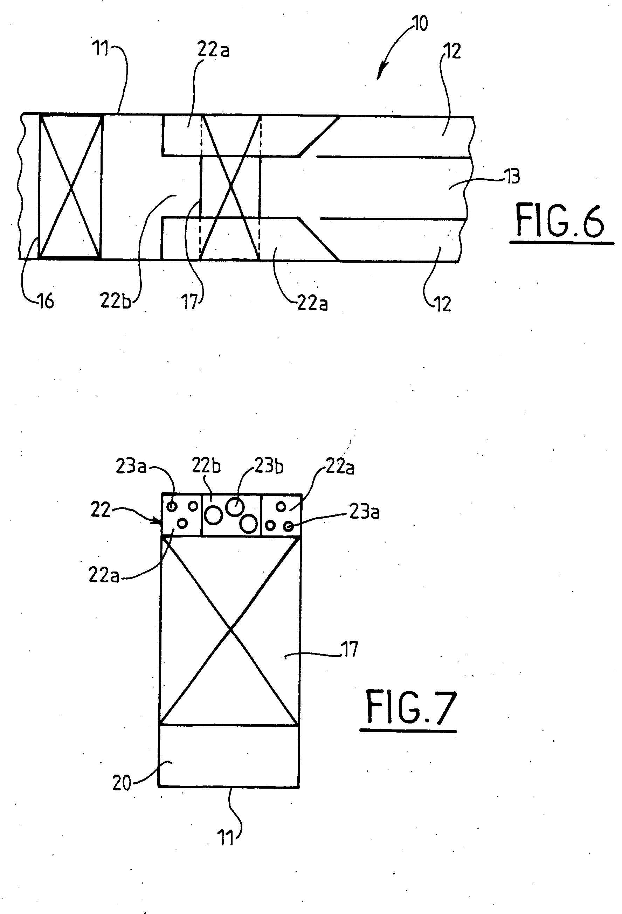

La figure 6 illustre une vue du dessus du passage d'air frais supérieur 22, ou by-pass. Comme on peut le voir, ce passage 22 est divisé physiquement en plusieurs zones de distribution d'air frais, par exemple deux zones latérales 22a et une zone centrale 22b qui communiquent chacune avec une conduite particulière. Ainsi, les zones latérales 22a de distribution aboutissent dans la conduite de dégivrage 12 tandis que la zone centrale 22b de distribution aboutit dans la conduite haute d'aération 13.

Comme cela est illustré par la figure 7, les zones latérales 22a de distribution présentent chacune une section de passage d'air 23a nettement plus petite que la section de passage d'air 23b de la zone centrale 22b de distribution. Ainsi, cela permet d'optimiser la quantité de surcroît d'air frais envoyé en direction des différentes conduites annexes d'aération en fonction des besoins. L'extrémité du by-pass 22 est ainsi adaptée à la sortie où il débouche, comme cela est représenté sur la figure 6. Les sections 22b et 23b sont calibrées en fonction des besoins et permettent une mise au point fine de la quantité d'air frais et une meilleure régulation de la température.

Bien entendu, cette variante de réalisation peut être combinée avec celles des figures 2 à 5 afin d'améliorer encore la gestion du mixage et de la température de l'air envoyé aux conduites d'aération.

Il doit être bien entendu toutefois que ces exemples sont donnés uniquement à titre d'illustration de l'objet de l'Invention dont ils ne constituent en aucune manière une limitation.

Ainsi, la cinématique des volets 30 et 31 peut être différente dès lors que les volets se déplacent en translation, de préférence en opposition.

Le seconde passage d'air frais 22 peut présenter une autre répartition de ses zones de distribution en fonction des différentes conduites annexes d'aération avec lesquelles il communique.

L'invention n'est pas limitée à un appareil de climatisation car il est aussi adapté à un appareil de chauffage classique dans lequel un surcroît d'air frais peut être utile.

## Revendications

1. Appareil de chauffage et/ou de climatisation (10), en particulier pour habitacle de véhicule automobile, comprenant :
- un châssis externe (11) formant une conduite de circulation d'air chaud et/ou froid en direction de conduites annexes supérieure (12, 13) et inférieure (14) d'aération,
- un moyen de propulsion d'air (15) monté dans le châssis,
- un moyen de refroidissement d'air (16) placé dans le châssis, en aval du moyen de propulsion d'air,
- un moyen de chauffage (17) de l'air propulsé placé dans le châssis, en aval du moyen de refroidissement d'air,
**caractérisé en ce qu'**il comprend en outre deux passages d'air frais indépendants (20, 22) aménagés entre le moyen de chauffage (17) et la paroi intérieure du châssis (11), de part et d'autre dudit moyen de chauffage (17), de manière à procurer, lorsque cela est souhaité, un surcroît d'air frais en direction des conduites annexes d'aération (12 ; 13 ; 14).

2. Appareil selon la revendication 1, dans lequel le second passage d'air frais (22) communique directement avec au moins une conduite supérieure d'aération (12 ; 13).

3. Appareil selon la revendication 1 ou 2, dans lequel un organe d'obturation (25) est disposé en travers du second passage d'air frais (22) pour le fermer ou l'ouvrir.

4. Appareil selon la revendication 3, dans lequel l'organe d'obturation comprend un volet coulissant (30) monté en aval du moyen de chauffage et adapté pour passer d'une première position extrême, dans laquelle il obture totalement le second passage d'air frais (22), à une seconde position extrême dans laquelle il ouvre le second passage d'air frais (22) et vient se placer en regard d'une partie au moins du moyen de chauffage (17).

5. Appareil selon la revendication 4, **caractérisé en ce qu'**il comprend en outre un second volet coulissant (31) monté en aval du moyen de chauffage et adapté pour coulisser simultanément et en opposition avec le premier volet coulissant (30) de sorte que, dans une première position extrême opposée des deux volets (30, 31), lesdits volets (30, 31) obturent les deux passages d'air frais (20, 22) et laissent passer l'air au travers du moyen de chauffage (17) et, dans une seconde position extrême des deux volets (30, 31), lesdits volets (30, 31) sont disposés en regard du moyen de chauffage (17) et libèrent les deux passages d'air frais (20, 22).

6. Appareil selon la revendication 5, dans lequel les deux volets sont montés sur une tringlerie commune (50) permettant de déplacer les volets simultanément.

7. Appareil selon la revendication 6, dans lequel chaque volet (30 ; 31) est muni d'au moins une articulation (40 ; 41) reliée à un levier de commande (42 ; 43) présentant une crémaillère (44 ; 45) en prise avec un pignon (47) commun aux deux leviers (42, 43), lesdits leviers (42, 43) étant guidés en translation par des doigts de guidage (50, 51) et des butées de soutien (52, 53) fixés au châssis (11).

8. Appareil selon l'une quelconque des revendications précédentes, dans lequel la sortie du second passage d'air frais (22) est divisée en plusieurs zones de distribution indépendantes (22a ; 22b) ayant des sections de passage d'air (23a ; 23b) différentes et communicant chacune avec une conduite d'aération (12 ; 13 ; 14).

9. Appareil selon la revendication 8, dans lequel la section de passage d'air frais (23a) de la zone de distribution (22a) communiquant avec la conduite de dégivrage (12) est plus petite que la section de passage d'air frais (23b) de la zone de distribution (22b) communicant avec la conduite supérieure d'aération (13).

10. Véhicule automobile équipé d'un appareil de chauffage et/ou de climatisation (10) selon l'une quelconque des revendications précédentes.
